(19) Europäisches Patentamt
European Patent Office
Office européen des brevets

(11) Veröffentlichungsnummer: **0 088 418**
**B1**

# (12) EUROPÄISCHE PATENTSCHRIFT

(45) Veröffentlichungstag der Patentschrift: **04.06.86**

(51) Int. Cl.⁴: **C 09 B 25/00**, D 06 P 1/42, C 09 D 11/00, D 21 H 3/80

(21) Anmeldenummer: **83102210.8**

(22) Anmeldetag: **07.03.83**

(54) **Chinophthalonverbindungen, Verfahren zu deren Herstellung und deren Verwendung zum Färben und Bedrucken von Textilmaterialien, Papier, Leder und zur Bereitung von Tinten.**

(30) Priorität: **10.03.82 CH 1474/82**

(43) Veröffentlichungstag der Anmeldung: **14.09.83 Patentblatt 83/37**

(45) Bekanntmachung des Hinweises auf die Patenterteilung: **04.06.86 Patentblatt 86/23**

(84) Benannte Vertragsstaaten: **AT BE CH DE FR GB IT LI SE**

(56) Entgegenhaltungen:
**EP-A-0 061 624**
**FR-A-2 073 388**
**US-A-3 023 212**
**US-A-3 293 246**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Adam, Jean-Marie, Dr., Rue de Village Neuf 60 D, F-68300 Rosenau (FR)**

(74) Vertreter: **Zumstein, Fritz jun., Dr. et al, Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

**EP 0 088 418 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft neue Chinophthalonverbindungen der Formel I

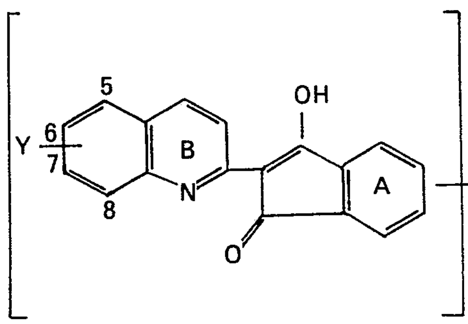

$-(Z)_m-(Q)_n^{\oplus} An_n^{\ominus}$ (I),

worin bedeuten:
Y entweder einen Substituenten der Formel

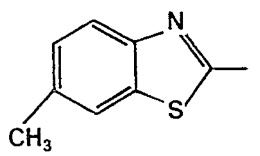

,

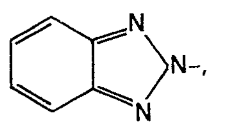

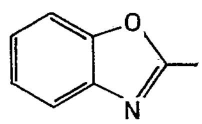

oder

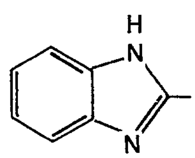

oder einen in 5/6- oder 7/8-Stellung anellierten Benzolring, wobei diese Substituenten und Benzolringe substituiert sein können;
Z ein mehrwertiges Brückenglied,
Q einen kationischen Rest der Formel

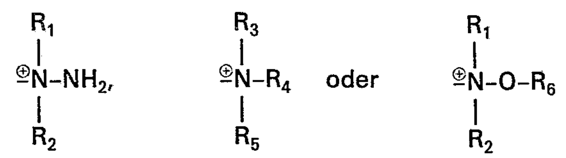

mit $R_1$ bis $R_6$ unabhängig voneinander einen gegebenenfalls substituierten $C_1$–$C_4$-Alkylrest, oder die Reste $R_1$ und $R_2$ oder $R_3$ und $R_4$ oder $R_3$ und $R_4$ und $R_5$ bilden zusammen mit dem N-Atom einen heterocyclischen Ring;
m die Zahlen 1 oder 2, vorzugsweise 1, n die Zahlen 1 oder 2, insbesondere 1, An ein Anion und worin die Kerne A und/oder B substituiert sein können. Aus der US-A 3 023 212 sind basische und kationische Farbstoffe der Chinophthalonreihe und deren Verwendung zum Färben von Acrylfasern und sauer modifizierten Polyesterfasern bekannt. Im Gegensatz zu den erfindungsgemässen Verbindungen der Formel I sind in dieser US-A konkret keine Chinophthalonfarbstoffe beschrieben, die im Chinolinring entweder einen ankondensierten Benzolring oder einen heterocyclischen Ring als Substituenten enthalten.

Der definitionsgemässe Substituent Y oder anellierte Benzolring Y kann substituiert sein. Als Substituenten kommen beispielsweise in Frage: die OH-Gruppe; eine $C_1$–$C_4$-Alkylgruppe (unverzweigt oder verzweigt) oder Halogen, wie Fluor, Chlor oder Brom.

In bevorzugten Chinophthalonverbindungen bedeutet Y vor allem den Substituenten der Formel

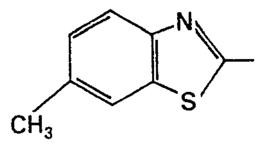

,

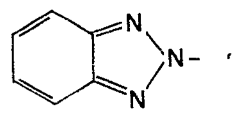

,

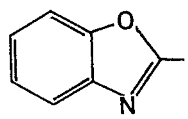

oder

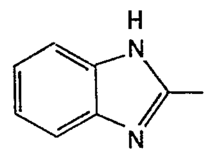

oder einen in 5/6- oder 7/8-Stellung anellierten Benzolring.

Beim mehrwertigen Brückenglied Z handelt es sich beispielsweise um folgende Gruppen:

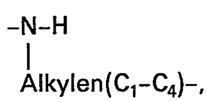

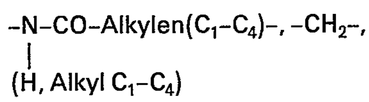

$-CONH$-Alkylen($C_1$–$C_4$)–, $-SO_2NH$-Alkylen($C_1$–$C_4$)–,

$-CH_2-NHCO$-Alkylen($C_1$–$C_4$)– oder

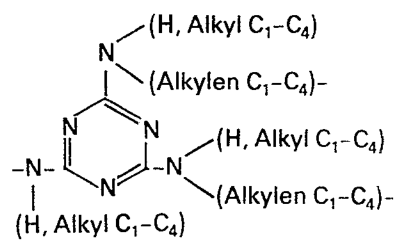

wobei jeder der Alkyl- und Alkylenreste noch

substituiert sein kann, z.B. durch OH, Halogen (F, Cl, Br), $NH_2$ und

>N-Alkyl $C_1$-$C_4$.

Bevorzugte Brückenglieder Z sind

-NH-$CH_2CH(OH)$-$CH_2$,

-$CH_2$-NHCO-Alkylen($C_1$-$C_4$)- insbesondere

-$CH_2$-NHCO-$CH_2$- und

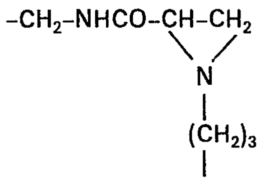

-N-CO-Alkylen($C_1$-$C_4$)-, vor allem -NHCO-$CH_2$-
|
(H, Alkyl $C_1$-$C_4$)

und

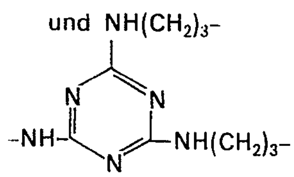

Bedeutet $R_1$ bis $R_6$ eine substituierte $C_1$-$C_4$-Alkylgruppe, so kommt als Substituent vor allem die -OH, -$NH_2$, -N(Alkyl 1-4)$_2$ oder Phenyl-Gruppe in Frage.

Bilden $R_1$ und $R_2$ und/oder $R_3$ und $R_4$ unter Einschluss des N-Atoms einen heterocyclischen Ring, so handelt es sich beispielsweise um einen Morpholin-, Pyrrolidin-, Piperidin-, Piperazin-, Imidazol- und Triazolring.

Bilden $R_3$ und $R_4$ zusammen mit $R_5$ unter Einschluss des N-Atoms einen heterocyclischen Ring, so handelt es sich beispielsweise um einen gegebenenfalls substituierten (z.B. durch $C_1$-$C_4$-Alkyl) Pyridiniumring oder um einen Triäthylendiaminring der Formel

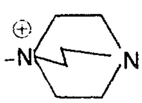 und 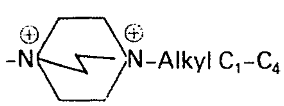

wobei der an das kationische N-Atom gebundene Alkylrest noch substituiert sein kann, z.B. durch $NH_2$, NH-Alkyl $C_1$-$C_4$ und N(Alkyl $C_1$-$C_4$)$_2$.

Q in der Bedeutung des definitionsgemässen kationischen Restes stellt beispielsweise folgende Reste dar:

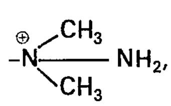

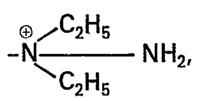

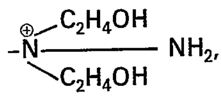

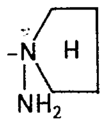 , 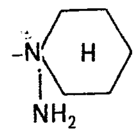 ,

$\overset{\oplus}{-N}(CH_3)_3$, $\overset{\oplus}{-N}(C_2H_4OH)_3$,

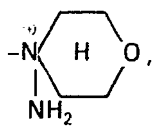 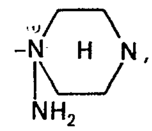

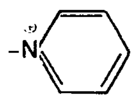 , 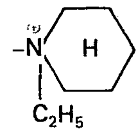

$\overset{\oplus}{-N}(C_2H_5)_3$, $\overset{\oplus}{-N}(C_2H_4OH)_2$
| 
$CH_3$

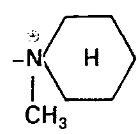 , 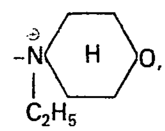

$\overset{\oplus}{-N}(C_2H_5)_2$,
|
$CH_3$

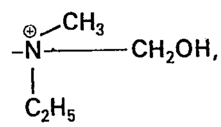

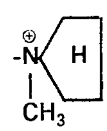 , 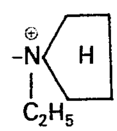

$\overset{\oplus}{-N}$-$(CH_3)_2$,
|
$C_2H_5$

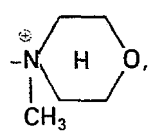 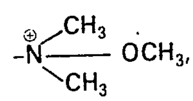

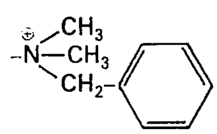 , 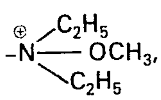

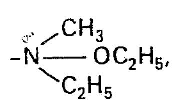 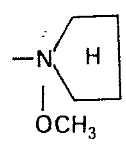 ,

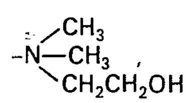 .

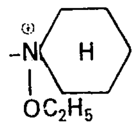 , 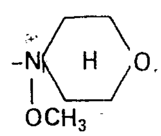 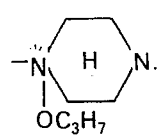

In bevorzugten Chinophthalonverbindungen der Formel I bedeutet Q einen kationischen Rest der Formel

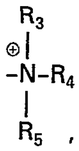

worin $R_3$, $R_4$ und $R_5$ unabhängig voneinander einen gegebenenfalls substituierten $C_1$–$C_4$-Alkylrest bedeutet, vor allem einen Trialkylammonium, wie Trimethylammoniumrest, oder $R_3$, $R_4$ und $R_5$ bilden zusammen mit dem N-Atom einen heterocyclischen Ring, vor allem einen Pyridiniumring der Formel

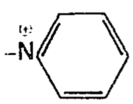

Ist der Kern A substituiert, so kommen als Substituenten beispielsweise in Frage: Halogen wie Fluor, Chlor oder Brom; $C_1$–$C_4$-Alkyl (unverzweigt oder verzweigt), $NO_2$, $NH_2$, NHCO-Alkyl($C_1$–$C_4$), COO-Alkyl($C_1$–$C_4$), $C_1$–$C_4$-Alkoxy, S-Alkyl($C_1$–$C_4$), $SO_2$-Alkyl($C_1$–$C_4$), NHCO-Phenyl, COO-Phenyl, Phenoxy, Thiophenoxy und $SO_2$-Phenyl. In den bevorzugten Chinophthalonverbindungen ist der Kern A nicht weitersubstituiert oder ein- oder mehrmals durch Halogen, vor allem Chlor, substituiert.

Als Substituenten im Kern B kommen beispielsweise die folgenden in Betracht: Halogen, wie Fluor, Chlor oder Brom; $C_1$–$C_4$-Alkyl (unverzweigt und verzweigt), OH, $C_1$–$C_4$-Alkoxy, Phenoxy, NH-Alkyl($C_1$–$C_4$), NH-Phenyl, S-Alkyl($C_1$–$C_4$), Thiophenoxy, $SO_2$-Alkyl($C_1$–$C_4$), $SO_2$-Phenyl, COO-Alkyl($C_1$–$C_4$) und COO-Phenyl. In den bevorzugten Chinophthalonverbindungen ist der Kern B nicht weitersubstituiert.

Die Gruppierung $-(Z)_{\overline{m}}(Q)_n{}^{\oplus}An^{\ominus}{}_n$ kann an jedem Benzol- oder Phenylkern oder auch am Kern B gebunden sein.

Beim Ausdruck «$C_1$–$C_4$-Alkyl» handelt es sich hier und im folgenden beispielsweise um den Methyl-, Äthyl-, n-Propyl-, iso-Propyl-, n-Butyl- oder tert.-Butylrest; sinngemäss gilt dies auch für «$C_1$–$C_4$-Alkylen».

Als Anionen «An» kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Napthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Besonders hervorzuheben sind jene Chinophthalonverbindungen der Formel I, worin bedeuten:

Y einen Substituenten der Formeln

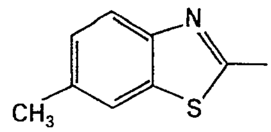

oder

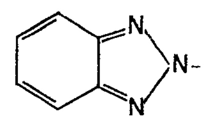

oder einen in 5/6- oder 7/8-Stellung anellierten Benzolring,

der Kern B nicht substituiert ist,

der Kern A nicht substituiert ist oder durch Halogen oder gegebenenfalls durch den Rest $(Z)_{\overline{m}}(Q)^{\oplus}{}_n An^{\ominus}{}_n$ substituiert ist,

Z ein mehrwertiges Brückenglied der Formel

$-CH_2NHCOCH_2-$, $-NHCOCH_2-$ oder

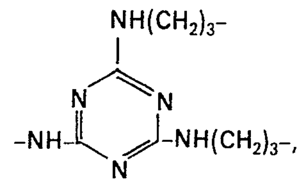

Q einen kationischen Rest der Formel

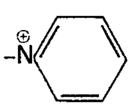

oder $-\overset{\oplus}{N}(CH_3)_3$,

und m die Zahl 1.

Die neuen Chinophthalonverbindungen der Formel I stellen gut wasserlösliche Produkte dar, die nach bekannter Art und Weise erhalten werden. Eine Herstellungsmöglichkeit besteht beispielsweise darin, dass man eine Chinaldinverbindung der Formel III

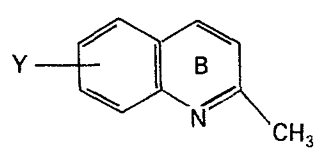

(III)

mit einem Phthalsäureanhydrid der Formel IV

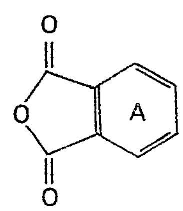

(IV)

zu einem Kondensationsprodukt der Formel II kondensiert

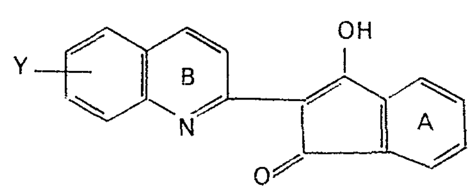

(II)

wobei die Symbole Y, B und A die unter Formel I angegebene Bedeutung haben.

Die Chinaldinverbindungen der Formel III sind bekannt und können nach bekannten Methoden hergestellt werden. Es werden beispielsweise folgende Verbindungen eingesetzt:

5,6-Benzochinaldin,
7,8-Benzochinaldin,
6-(6'-Methyl-benzthiazol)-chinaldin und
6-Benzotriazolchinaldin.

Bekannt sind ebenfalls die Phthalsäureanhydridverbindungen der Formel IV, welche auch nach bekannten Methoden hergestellt werden können. Folgende Verbindungen können z.B. eingesetzt werden:

Phthalsäureanhydrid,
3,4,5,6-Tetrachlorphthalsäureanhydrid,
3-Nitrophthalsäureanhydrid, und
4-Nitrophthalsäureanhydrid.

Die Kondensationsreaktion der Verbindung III mit IV verläuft nach bekannter Art und Weise (z.B.: Ann. Chem. Bd. 516, S. 155 [1935]).

In dieses Kondensationsprodukt der Formel II wird dann die Gruppierung $(Z)_m(Q)_n^{\oplus}An_n^{\ominus}$ stufenweise in Abhängigkeit von der Bedeutung des Symbols Z wie folgt eingeführt:

a) Bedeutet Z eine $-CH_2-NHCO-Alkylen(C_1-C_4)$-Gruppe so setzt man das Kondensationsprodukt der Formel II mit Methylolamiden der Formel $HO-CH_2-NHCO-Alkylen(C_1-C_4)-Hal$ zu einem Produkt der Formel IIa

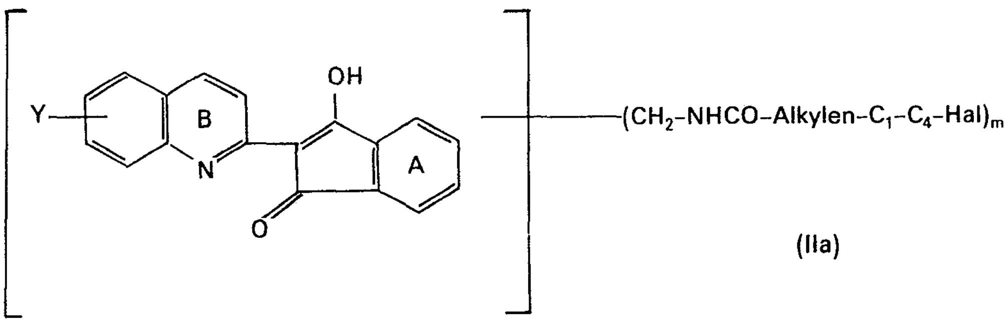

(IIa)

um. (Einhornreaktion, Angew. Chem. 69, 463 [1957].) Man arbeitet dabei in Gegenwart von konzentrierter Schwefelsäure (z.B. Monohydrat) oder Phosphorsäure, gegebenenfalls zusammen mit Phosphorpentoxid, bei einer Temperatur von 0° bis 50°C, vorzugsweise bei Raumtemperatur. Nach Einführung dieses Methylolamids erfolgt die Einführung der kationischen Gruppe Q. Dies kann beispielsweise derart geschehen, dass man das endständige Halogenatom «Hal» in der Formel IIa mit einem tertiären Amin (entsprechend dem Rest Q) wie Trimethylamin oder Pyridin umsetzt, oder indem man dieses endständige Halogenatom «Hal» in der Formel IIa mit einem sekundären Amin (z.B. Dimethylamin) umsetzt und dieses anschliessend nach bekannter Art und Weise quaterniert. In beiden Fällen erhält man die Chinophthalonverbindungen der Formel I.

Eine andere Herstellungsmöglichkeit besteht darin, dass man die Verbindung (IIa) in situ herstellt, indem man die Verbindung (II) mit Formaldehyd und einem Amid der Formel $NH_2CO-Alkylen\ C_1-C_4-Hal$, wie beschrieben, umsetzt und dann wie angegeben weiter verfährt.

b) Für den Fall, dass Z eine $-NH-Alkyl(C_1-C_4)$-Gruppe bedeutet, geht man von einem Kondensationsprodukt der Formel II aus, welches ein Halogenatom (z.B. im Kern A oder B oder in einem Substituenten Y) enthält, und setzt dieses mit einer Halogen-amino-alkyl-Verbindung der Formel $H_2N-Alkyl(C_1-C_4)-Hal$ zu einem Produkt der Formel IIb

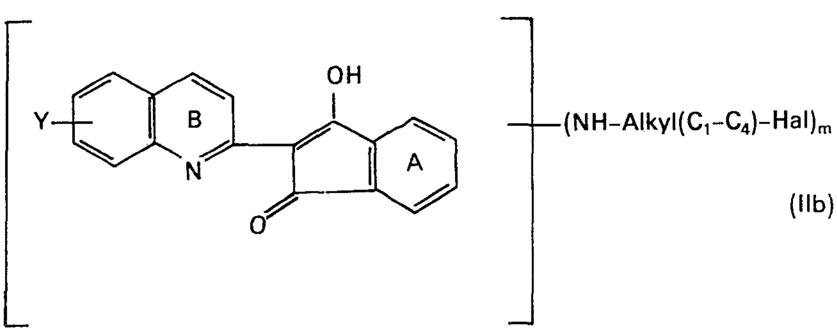

(IIb)

um. Anschliessend erfolgt die Einführung der kationischen Gruppe Q wie unter der Verfahrensvariante a) beschrieben.

Eine weitere Herstellungsmöglichkeit ist diejenige, dass man von einem Kondensationsprodukt der Formel II ausgeht, welches eine Aminogruppe (z.B. im Kern A oder B oder in einem Substituenten Y) enthält, und setzt dieses mit einer Epoxyverbindung z.B. der Verbindung der Formel

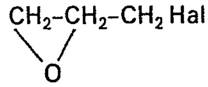
bzw.
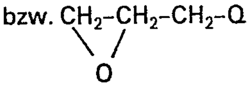

zu einem Produkt der Formel

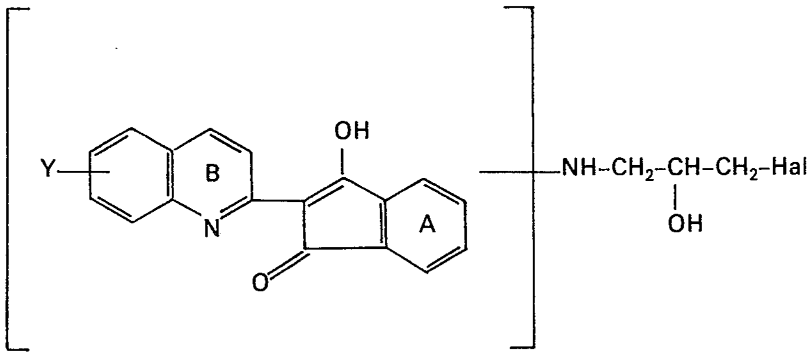
(A)

bzw.

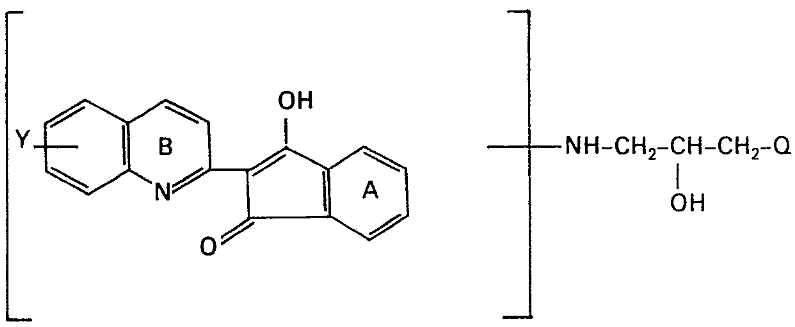
(B)

um, wobei im Produkt (A) das Hal-Atom durch den Rest Q anschliessend ersetzt wird.

c) Bedeutet Z eine $-CH_2$-Gruppe, so erfolgt die Einführung dieser Gruppe in das Kondensationsprodukt der Formel II beispielsweise derart, dass man dieses mit Formaldehyd und Salzsäure zu einem Produkt der Formel IIc

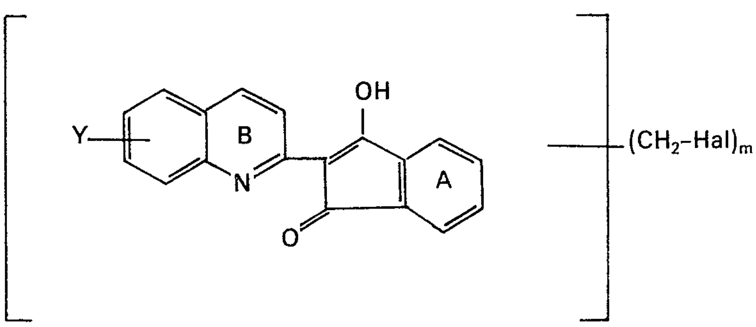
(IIc)

umsetzt. Anschliessend erfolgt die Einführung der kationischen Gruppe Q wie unter der Verfahrensvariante a) beschrieben.

d) Stellt das Symbol Z eine $-CONH$-Alkylen($C_1$–$C_4$)- oder $-SO_2NH$-Alkylen ($C_1$–$C_4$)-Gruppe dar, so geht man zweckmässig von einem Kondensationsprodukt der Formel II aus, welches eine COOH oder $SO_3$ H-Gruppe (z.B. im Kern A oder B) enthält und setzt dieses mit einer Halogen-amino-alkyl-Verbindung $NH_2$-Alkylen($C_1$–$C_4$)-Hal zu einem Produkt der Formel $IId_1$

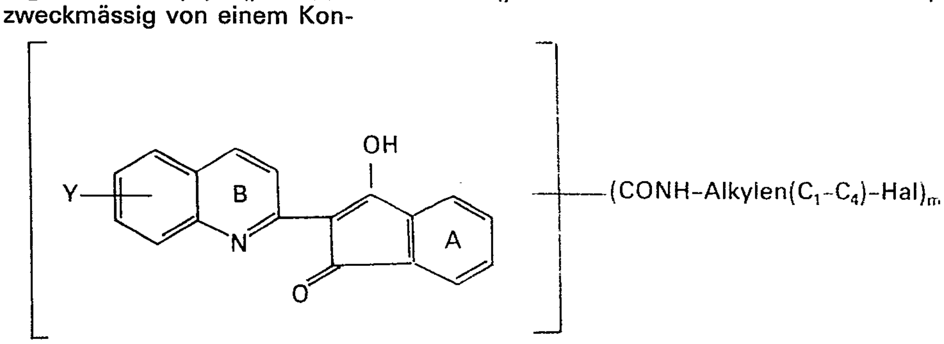
($IId_1$)

bzw. zu einem Produkt der Formel $IId_2$

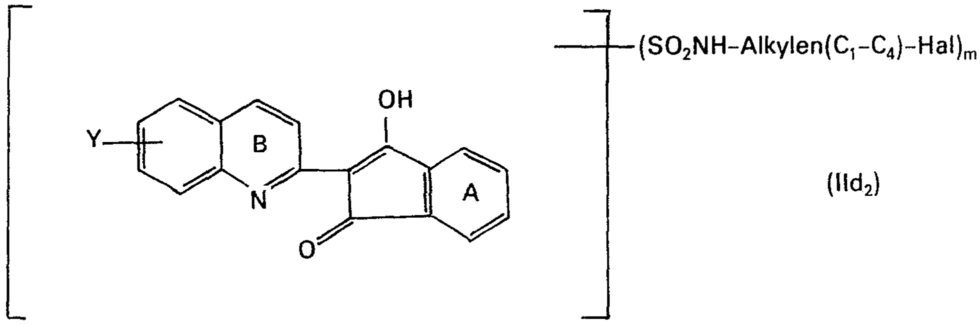

($IId_2$)

um. Anschliessend erfolgt die Einführung der kationischen Gruppe Q wie unter der Verfahrensvariante a) beschrieben.

e) Bedeutet Z die Gruppierung

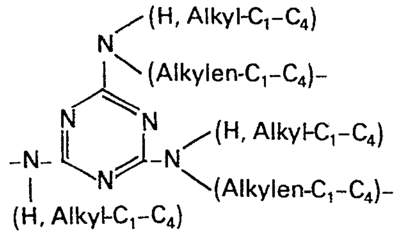

so führt man diese Gruppierung vorteilhaft derart ein, dass man von einem Kondensationsprodukt der Formel II ausgeht, welches eine Aminogruppe enthält und setzt dieses mit Cyanurchlorid (gegebenenfalls auch Cyanurfluorid) zu einer Verbindung der Formel IIe

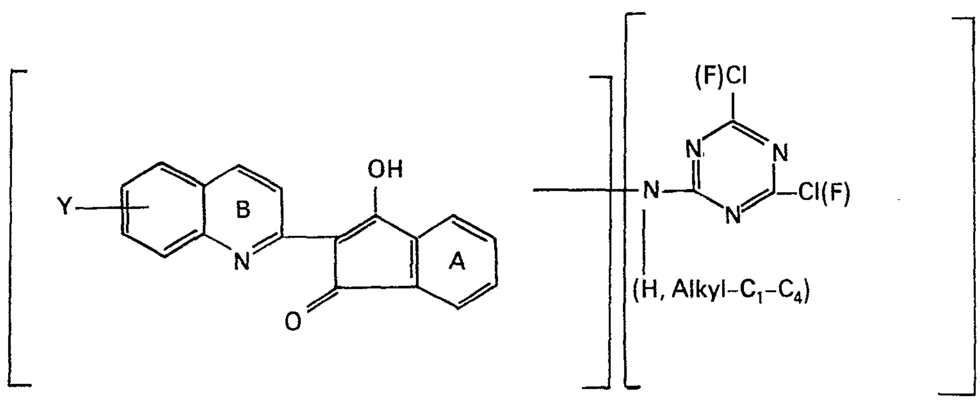

(IIe)

um. Anschliessend setzt man diese Verbindung IIe mit zwei Mol einer Diaminoalkylverbindung der Formel $H_2N[Alkyl\text{-}C_1\text{-}C_4\text{-}N(Alkyl\text{-}C_1\text{-}C_4)_2$ bzw. $HN[Alkyl\text{-}C_1\text{-}C_4\text{-}N(Alkyl\text{-}C_1\text{-}C_4)_2]_2$ um und quaterniert die endständige Dialkylaminogruppe zur definitionsgemässen Gruppe Q.

f) Stellt Z die Gruppierung

$-N\text{-}CO\text{-}Alkylen\text{-}C_1\text{-}C_4\text{-}$
|
$(H, Alkyl\text{-}C_1\text{-}C_4)$

dar, so kann diese Gruppe beispielsweise derart eingeführt werden, dass man von einem Kondensationsprodukt der Formel II ausgeht, welches eine Aminogruppe enthält und setzt dieses mit einer Verbindung der Formel $Hal\text{-}CO\text{-}Alkylen\text{-}C_1\text{-}C_4\text{-}Hal$ unter anschliessender Einführung der kationischen Gruppe Q, wie unter der Verfahrensvariante a) beschrieben, um.

Verwendung finden die neuen Chinophthalonverbindungen der Formel I vor allem als Farbstoffe zum Färben und Bedrucken von Textilmaterialien, Papier, Leder und zur Bereitung von Tinten.

Dienen diese Farbstoffe zum Färben und Bedrucken von Textilmaterialien, so kommen als solche Wolle, Seide und sauer modifizierte Polyamidmaterialien sowie Polyacrylnitrilmaterialien, vor allem in Form von Nasskabel, und basisch färbbares, modifiziertes Polyestermaterial in Frage. Desweiteren kommen natürliche und regenerierte Cellulosematerialien, im besonderen Baumwolle und Viscose in Frage, wobei man z.T. brillante gelbe Ausfärbungen erhält. Die erfindungsgemässen Farbstoffe der Formel I haben auf diesen Textilmaterialien vor allem auf den genannten Cellulosematerialien ein gutes Ziehvermögen, einen guten Ausziehgrad und guten Aufbau und die erhaltenen Färbungen weisen gute Echtheiten, vor allem gute Nassechtheit und

Lichtechtheit auf.

Die neuen Farbstoffe dienen auch zum Färben von Polyacrylnitril in der Spinnmasse.

Eine bevorzugte Verwendung der erfindungsgemässen Farbstoffe der Formel I liegt in der Anwendung zum Färben von Papier aller Arten, vor allem von gebleichten und geleimten ligninfreiem Papier sowie von Halbkartons und Kartons. Ganz besonders geeignet sind diese Farbstoffe zum Färben von ungeleimtem Papier (z.B. Servietten) als Folge ihrer sehr hohen Standard-Affinität zu diesem Substrat.

Die erfindungsgemässen Farbstoffe ziehen sehr gut auf diese Substrate, wobei das Abwasser - auch bei tiefen Nuancen (bis über 1/1 RT = Richttyptiefe) - farblos bleibt, was ein eminenter technischer und ökologischer Vorteil, insbesondere im Hinblick auf die heutigen Abwasser-Gesetze, ist. Der gute Ausziehgrad ist auch für eine gute Reproduzierbarkeit der Nuance von Vorteil. Der Ausziehgrad wird praktisch nicht von der Wasserhärte beeinflusst. Die Färbungen sind nassecht, d.h. sie zeigen keine Neigung zum Ausbluten, wenn gefärbtes Papier in nassem Zustand mit feuchtem weissem Papier in Berührung gebracht wird.

Diese Eigenschaft ist besonders für Servietten erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier, die grosse Ausziehgeschwindigkeit der erfindungsgemässen Farbstoffe verbunden mit dem sehr guten Aufbau ist für das Kontinue-Färben von Papier von grossem Vorteil und ermöglicht somit einen sehr breiten und wirtschaftlichen Einsatz dieser neuen Farbstoffe. Sie weisen folgende Vorteile auf:

a) eine einfachere und schnellere Korrektur der Nuance und deshalb weniger Verlust an nicht-Typ-konformem Papier (Ausschuss);

b) eine bessere Konstanz der Nuance (kein «Tailing») und

c) es erübrigt sich eine gründliche Reinigung der Mischbütte nach jeder Partie, wobei gleichzeitig der Arbeitsprozess verkürzt und das Verfahren optimiert wird.

Die gelben Ausfärbungen sind brillant und haben sehr gute Echtheiten, vor allem Lichtechtheit.

Weiter dienen die Farbstoffe der Formel I zum Färben von Ledermaterialien nach den verschiedensten Applikationsverfahren, wie Sprühen, Bürsten und Tauchen und zur Bereitung von Tinten aller Art wie für Kugelschreiber und Drucktinten.

Die folgenden Beispiele veranschaulichen die Erfindung, ohne sie darauf zu limitieren. Die Temperaturen sind in Grad Celsius angegeben, Teile (T) bedeuten Gewichtsteile und %-Angaben sind Gewichtsprozente.

Die Abkürzung RKN stellt eine Qualitätsbezeichnung dar und gibt den Reinheitsgrad der Cellulose an; die Abkürzung SR = Schopper-Riegler gibt den Mahlgrad an.

Beispiel 1

16 T des Kondensationsproduktes aus 5,6-Benzochinaldin und Phthalsäureanhydrid werden mit 7 T N-Methylolchloracetamid bei 0-5° in 100 T Monohydrat eingetragen und so lange gerührt, bis im Dünnschichtchromatogramm kein Ausgangsmaterial mehr sichtbar ist. Man giesst das Reaktionsgemisch auf Eis, wobei das Reaktionsprodukt ausfällt; anschliessend wird abfiltriert und mit Wasser neutral gewaschen. Nach der Trocknung erhält man 20 T der Verbindung:

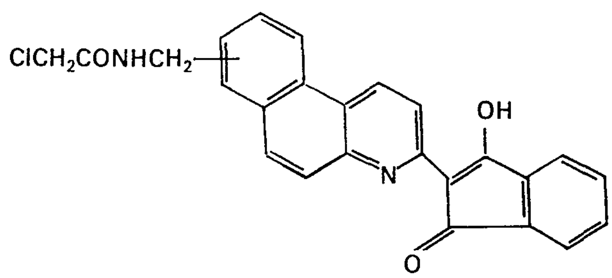

10 T dieser Verbindung werden in 100 T Pyridin 1 Stunde auf 100° erwärmt. Die ausgefallene Chinophthalonverbindung der Formel

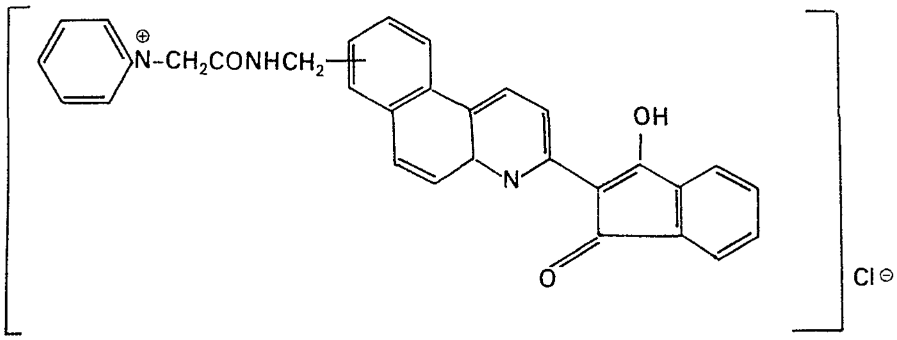

wird durch Filtration isoliert und getrocknet. Sie ist in Wasser sehr gut löslich und färbt Papier in einer brillanten farbstarken grünstichiggelben Nuance von sehr guter Echtheit (insbesondere Lichtechtheit) und zeigt einen ausgezeichneten Aufbau (farbloses Abwasser).

Beispiel 2

Man verfährt wie im Beispiel 1 und ersetzt die 100 T Pyridin durch 100 T einer 20%igen wässerigen Trimethylamin-Lösung. Man erhält den Farbstoff der Formel

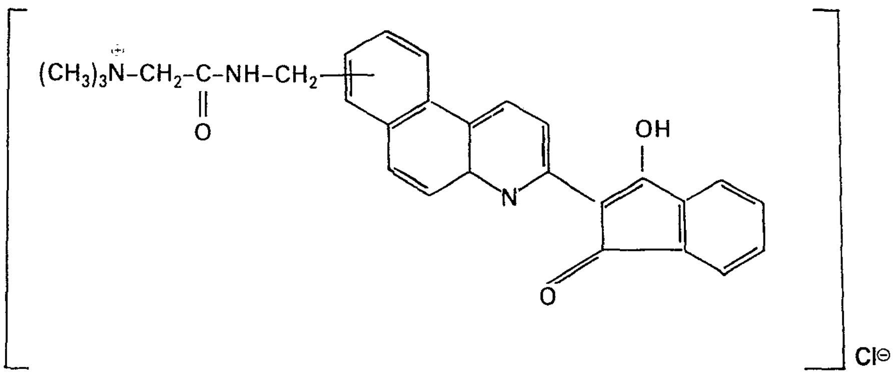

Er zeigt einen ausgezeichneten Aufbau auf Papier. Das Abwasser ist farblos.

Ersetzt man im Beispiel 1 die 16 T der Ausgangsbase durch die äquivalente Menge der in der folgenden Tabelle 1, Kol. 2 angegebenen Ausgangsbasen (Chinophthalone), und verfährt im übrigen wie angegeben, so erhält man ähnliche Farbstoffe, deren Nuancen auf Papier in Kol. 3 angegeben sind.

Tabelle 1

| 1 | 2 | 3 |
|---|---|---|
| Beispiel | Chinophthalone | Nuance auf Papier |
| 3 | 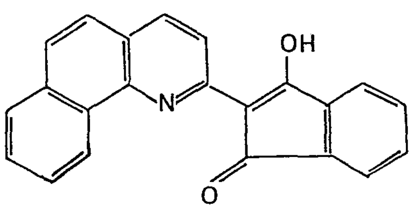 | gelb |
| 4 | 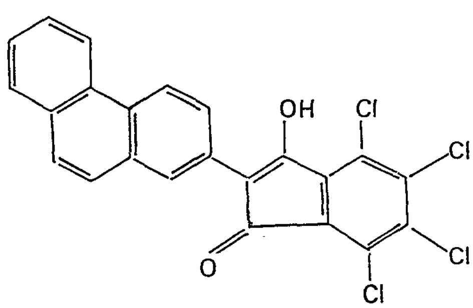 | gelb |

Tabelle 1 (Fortsetzung)

| 1 | 2 | 3 |
|---|---|---|
| Bei-spiel | Chinophthalone | Nuance auf Papier |
| 5 | 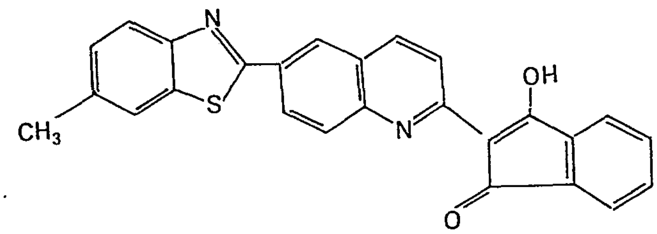 | gelb |
| 6 | 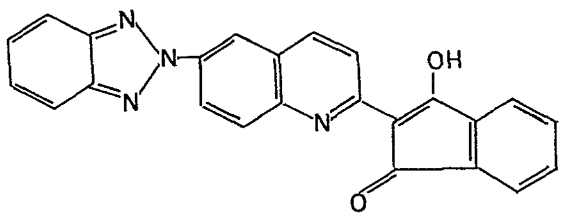 | gelb |
| 7 | 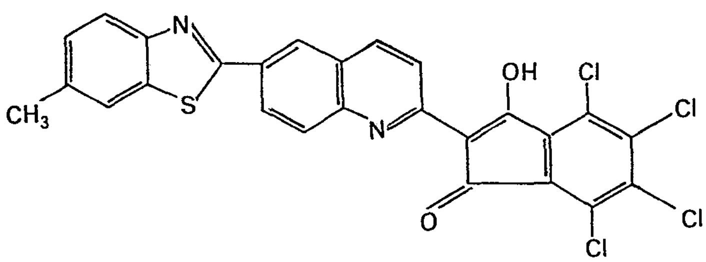 | gelb |
| 8 | 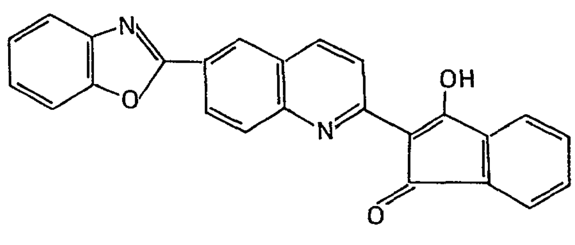 | gelb |
| 9 | 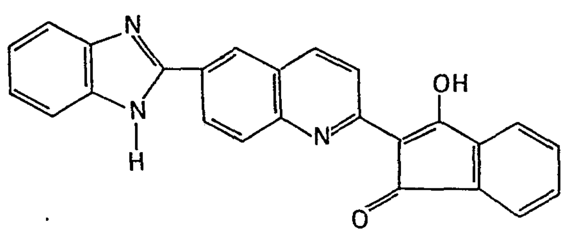 | gelb |

Beispiel 10

17 T der Amino-Chinophthalonverbindung der Formel

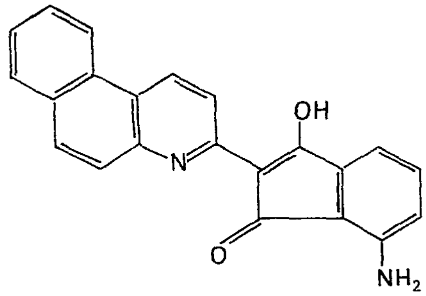

erhalten durch Kondensation aus 5,6-Benzochinaldin und 3-Nitrophthalsäureanhydrid und anschliessender Reduktion der Nitrogruppe mit Natriumsulfid werden in 200 T Dimethylformamid gelöst und bei 50° mit 6 T Chloracetylchlorid versetzt. Wenn das Dünnschichtchromatogramm kein Ausgangsmaterial mehr zeigt, werden 20 T Pyridin zugegeben. Man rührt noch 60 Minuten bei 100° und kühlt ab. Der auskristallisierte Farbstoff der Formel

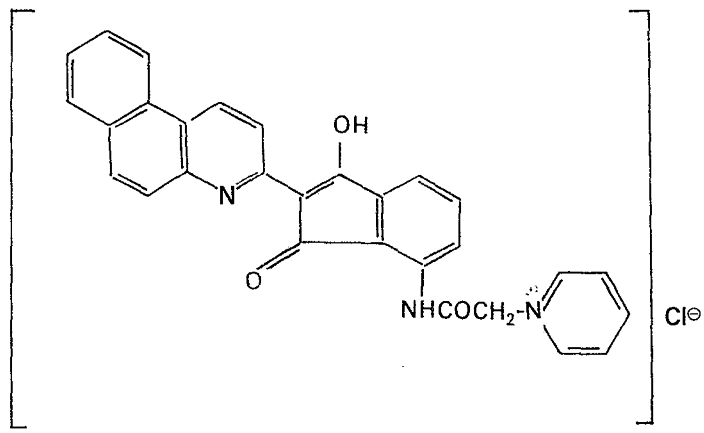

wird abgesaugt und getrocknet. Er färbt Papier in einer farbstarken gelben Nuance mit sehr guten Echtheiten. Das Abwasser ist farblos.

Verfährt man wie im Beispiel 10, verwendet jedoch anstelle der 17 T der Ausgangsbase äquivalente Mengen der in der folgenden Tabelle 2, Kol. 2, angegebenen Amino-Chinophthalonverbindungen, so erhält man ähnliche Farbstoffe, deren Nuance auf Papier in Kol. 3 angegeben ist.

Tabelle 2

| 1 | 2 | 3 |
|---|---|---|
| Beispiel | Chinophthalone | Nuance auf Papier |
| 11 | 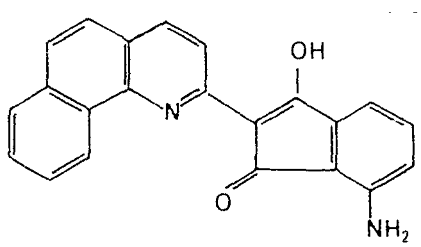 | gelb |

Tabelle 2 (Fortsetzung)

| 1 | 2 | 3 |
|---|---|---|
| Beispiel | Chinophthalone | Nuance auf Papier |
| 12 | 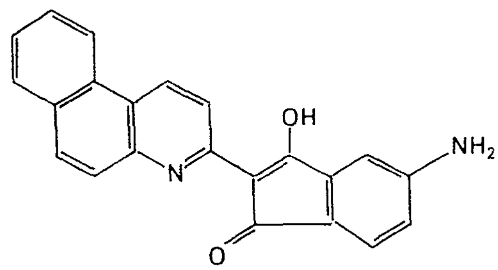 | gelb |
| 13 | 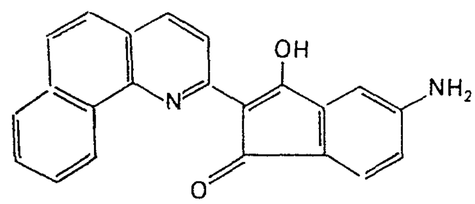 | gelb |
| 14 | 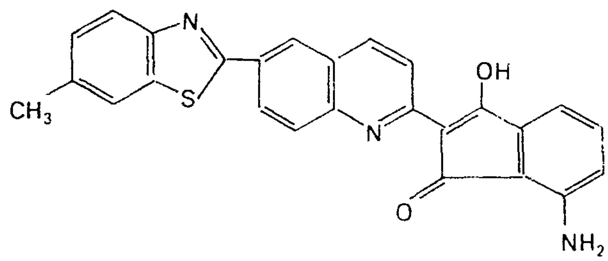 | gelb |
| 15 | 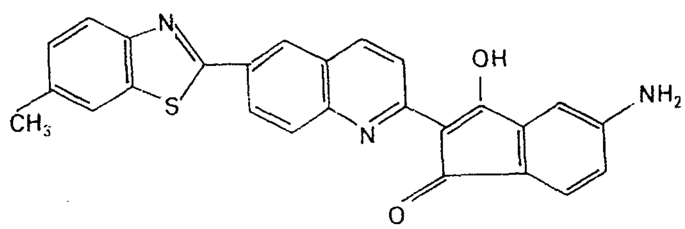 | gelb |
| 16 | 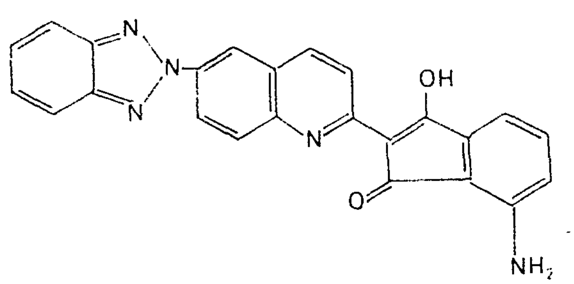 | gelb |
| 17 | 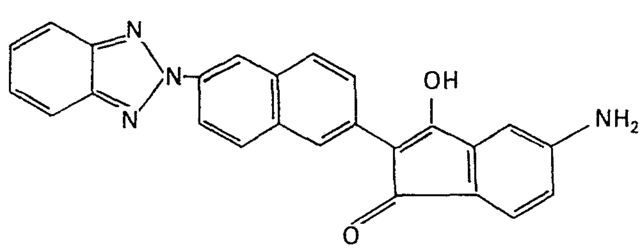 | gelb |

Beispiel 18

13 T der Amino-Chinophthalonverbindung gemäss Beispiel 7 werden in 60 T Nitrobenzol suspendiert und mit 8,1 T 2,4,6-Trichlortriazin in Gegenwart von 5,4 T N,N-Dimethylanilin umgesetzt. Das ausgefallene Reaktionsprodukt wird abgesaugt, gewaschen und in 80 T Toluol angeschlämmt. Durch Umsetzung mit 12,4 T 1-Amino-3-dimethylaminopropan erhält man das Zwischenprodukt der Formel

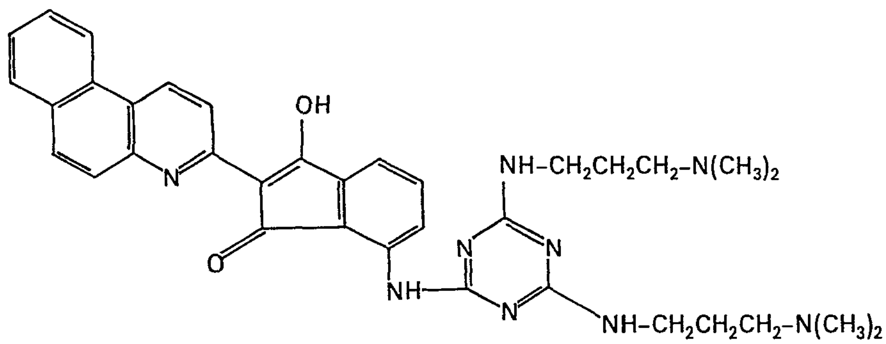

das in üblicher Art und Weise mit Dimethylsulfat quaterniert wird. Das entstehende Produkt der Formel

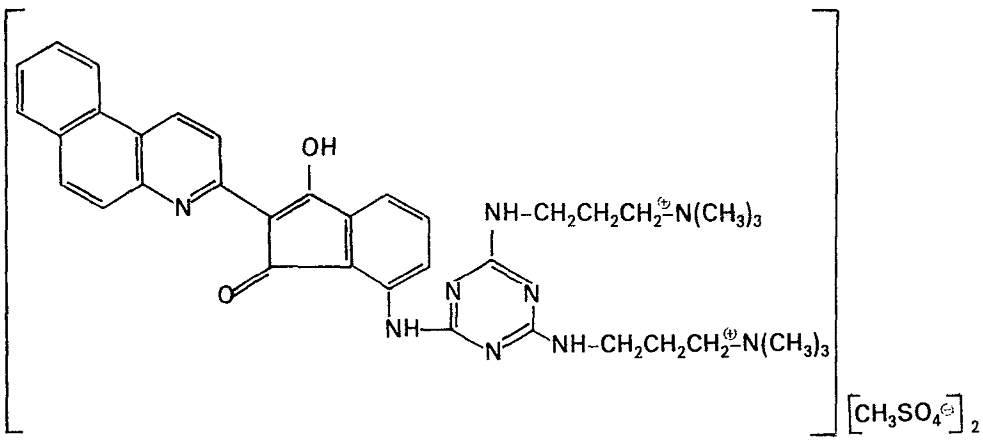

färbt Papier in farbstarken gelben Nuancen; das Abwasser ist farblos.

Ersetzt man im obigen Beispiel die 13 T der Amino-Chinophthalonverbindung durch entsprechende Teile eines Amino-Chinophthalons der Tabelle 2, Kol. 2, so erhält man unter den gleichen Reaktionsbedingungen ähnliche Farbstoffe mit gleich guten färberischen Eigenschaften.

Beispiel 19

Man mischt 50 T chemisch gebleichte Buche Sulfit mit 50 T gebleichtem Sulfit RKN 15 (Mahlgrad 20°SR) und 2 Teile der Chinophthalonverbindung gemäss Beispiel 1 in Wasser (pH 6, Wasserhärte 10d°H, Temperatur 20°, Flottenverhältnis 1:4). Nach 15minütigem Rühren werden Papierblätter auf einem Frank-Blattbildner hergestellt. Das Papier ist in einer sehr intensiven, brillanten, lichtechten gelben Nuance gefärbt. Der Ausziehgrad erreicht 100%. Das Abwasser ist farblos.

## Patentansprüche

1. Chinophthalonverbindungen der Formel I

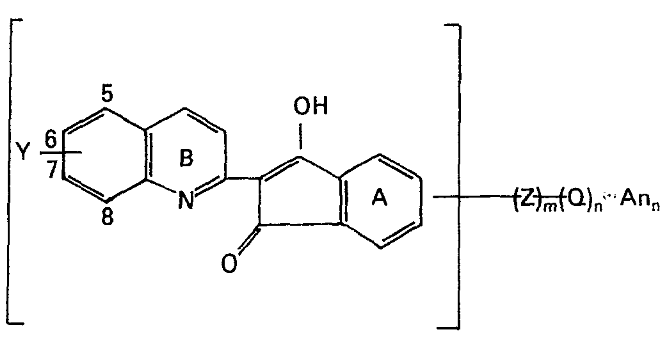

(I),

worin bedeuten:
Y entweder einen Substituenten der Formeln

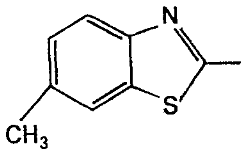 , 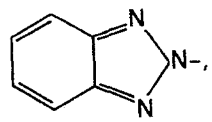

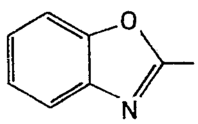 oder 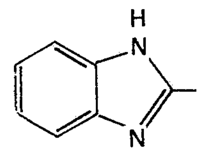

oder einen in 5/6- oder 7/8-Stellung anellierten Benzolring, wobei diese Substituenten und Benzolringe substituiert sein können;
Z ein mehrwertiges Brückenglied,
Q einen kationischen Rest der Formel

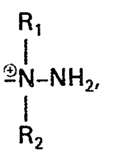 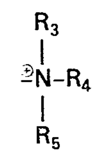 oder 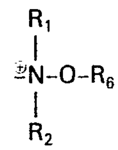

mit $R_1$ bis $R_6$ unabhängig voneinander einen gegebenenfalls substituierten $C_1$–$C_4$-Alkylrest, oder die Reste $R_1$ und $R_2$ oder $R_3$ und $R_4$ oder $R_3$ und $R_4$ und $R_5$ bilden zusammen mit dem N-Atom einen heterocyclischen Ring;
m die Zahlen 1 oder 2, n die Zahlen 1 oder 2,
An ein Anion und worin die Kerne A und/oder B substituiert sein können.

2. Chinophthalonverbindungen der Formel I gemäss Anspruch 1, dadurch gekennzeichnet, dass Y den Substituenten der Formel

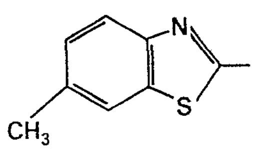 , 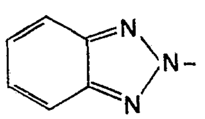 ,

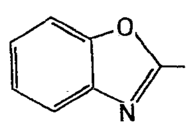 oder 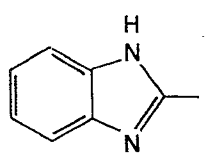

bedeutet.

3. Chinophthalonverbindungen der Formel I gemäss Anspruch 1, dadurch gekennzeichnet, dass Y einen in 5/6- oder 7/8-Stellung anellierten Benzolring bedeutet.

4. Chinophthalonverbindungen der Formel I gemäss Anspruch 1, dadurch gekennzeichnet, dass die Kerne A und B gegebenenfalls mit Ausnahme des Restes $(Z)_{\overline{m}}(Q)_n{}^{\oplus}An^{\ominus}{}_n$ nicht weiter substituiert sind, oder dass der Kern A durch Halogen substituiert ist.

5. Chinophthalonverbindungen der Formel I gemäss Anspruch 1, dadurch gekennzeichnet, dass Z eines der folgenden mehrwertigen Brückenglieder bedeutet:

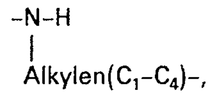

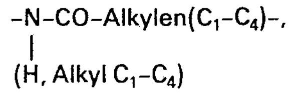 $-CH_2-$,

$-CONH-Alkylen(C_1-C_4)-$, $-SO_2NH-Alkylen(C_1-C_4)-$,

$-CH_2-NHCO-Alkylen(C_1-C_4)-$, oder

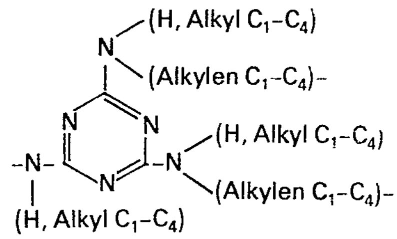

wobei jeder der Alkyl- und Alkylenreste noch substituiert sein kann.

6. Chinophthalonverbindungen gemäss Anspruch 5, dadurch gekennzeichnet, dass Z bedeutet:

$-NH-CH_2CH(OH)-CH_2$,

$-CH_2-NHCO-Alkylen(C_1-C_4)-$ insbesondere

$-CH_2-NHCO-CH_2-$ und

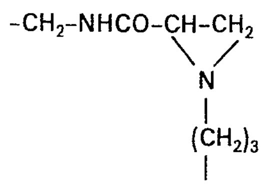

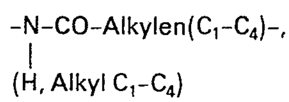 vor allem $-NHCO-CH_2-$

und 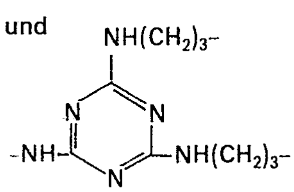

7. Chinophthalonverbindungen der Formel I gemäss Anspruch 1, dadurch gekennzeichnet, dass Q einen kationischen Rest der Formel

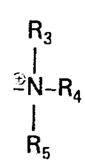

bedeutet, worin $R_3$, $R_4$ und $R_5$ unabhängig voneinander einen gegebenenfalls substituierten $C_1$–$C_4$-Alkylrest bedeutet oder $R_3$, $R_4$ und $R_5$ bilden zusammen mit dem N-Atom einen heterocyclischen Ring.

8. Chinophthalonverbindungen gemäss Anspruch 7, dadurch gekennzeichnet, dass Q den Pyridiniumrest der Formel

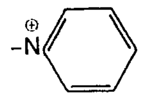

darstellt.

9. Chinophthalonverbindungen der Formel I gemäss Anspruch 1, dadurch gekennzeichnet, dass m die Zahl 1 bedeutet.

10. Chinophthalonverbindungen der Formel I gemäss Anspruch 1, dadurch gekennzeichnet, dass bedeuten:
Y einen Substituenten der Formeln

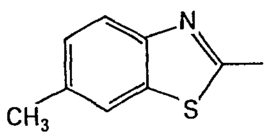 oder 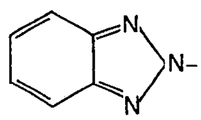

oder einen in 5/6- oder 7/8-Stellung anellierten Benzolring,
der Kern B nicht substituiert ist,
der Kern A nicht substituiert ist oder durch Halogen oder gegebenenfalls durch den Rest $(Z)_m(Q)^{\oplus}_n An^{\ominus}_n$ substituiert ist,
Z ein mehrwertiges Brückenglied der Formel

$-CH_2NHCOCH_2-$, $-NHCOCH_2-$ oder

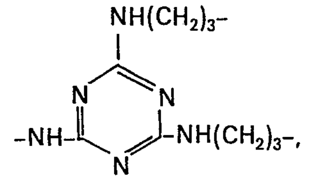

Q einen kationischen Rest der Formel

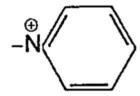 oder $-\overset{\oplus}{N}(CH_3)_3$,

und m die Zahl 1.

11. Verwendung der Chinophthalonverbindungen der Formel I gemäss Anspruch 1 als Farbstoffe zum Färben und Bedrucken von Textilmaterialien, Papier, Leder und zur Bereitung von Tinten.

12. Verwendung gemäss Anspruch 11 zum Färben und Bedrucken von Papier aller Arten.

13. Verwendung gemäss Anspruch 12 zum Färben und Bedrucken von gebleichtem, ungeleimtem ligninfreiem Papier (Tissue).

14. Verwendung gemäss Anspruch 11 zum Färben und Bedrucken von Polyacrylnitril- oder Cellulosematerialien.

15. Die mit den Chinophthalonverbindungen der Formel I gemäss Anspruch 1 gefärbten und bedruckten Materialien.

**Patentansprüche (für den Vertragsstaat AT)**

1. Verwendung von Chinophthalonverbindungen der Formel I

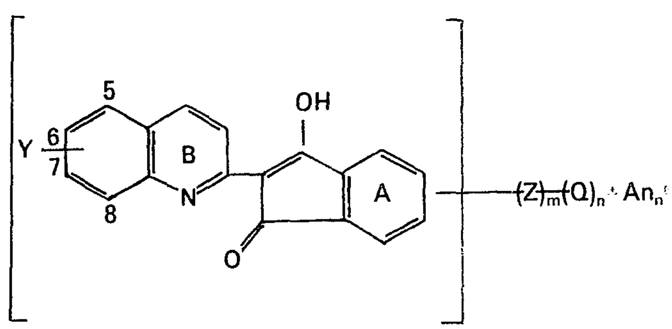 (I),

worin bedeuten:
Y entweder einen Substituenten der Formeln

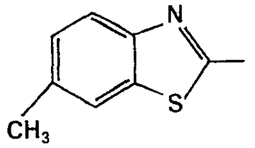, 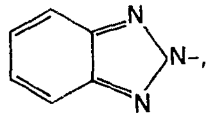

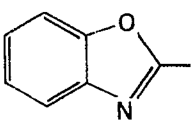 oder 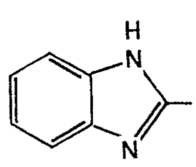

oder einen in 5/6- oder 7/8-Stellung anellierten Benzolring, wobei diese Substituenten und Benzolringe substituiert sein können;
Z ein mehrwertiges Brückenglied,
Q einen kationischen Rest der Formel

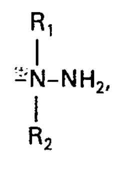 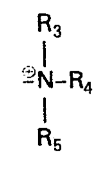 oder 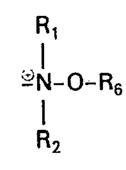

mit $R_1$ bis $R_6$ unabhängig voneinander einen gegebenenfalls substituierten $C_1$–$C_4$-Alkylrest, oder die Reste $R_1$ und $R_2$ oder $R_3$ und $R_4$ oder $R_3$ und $R_4$

und $R_5$ bilden zusammen mit dem N-Atom einen heterocyclischen Ring;
m die Zahlen 1 oder 2, n die Zahlen 1 oder 2,
An ein Anion und worin die Kerne A und/oder B substituiert sein können, als Farbstoffe zum Färben und Bedrucken von Textilmaterialien, Papier, Leder und zur Bereitung von Tinten.

2. Verwendung nach Anspruch 1 von Chinophthalonverbindungen der Formel I, worin Y den Substituenten der Formel

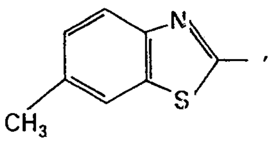 , 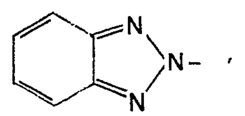 ,

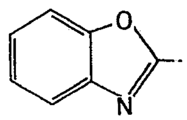 oder 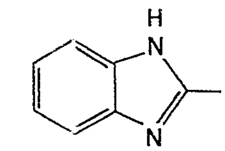

bedeutet.

3. Verwendung nach Anspruch 1 von Chinophthalonverbindungen der Formel I, worin Y einen in 5/6- oder 7/8-Stellung anellierten Benzolring bedeutet.

4. Verwendung nach Anspruch 1 von Chinophthalonverbindungen der Formel I, worin die Kerne A und B gegebenenfalls mit Ausnahme des Restes $(Z)_{\overline{m}}(Q)_n{}^{\oplus}An^{\ominus}{}_n$ nicht weiter substituiert sind, oder dass der Kern A durch Halogen substituiert ist.

5. Verwendung nach Anspruch 1 von Chinophthalonverbindungen der Formel I, worin Z eines der folgenden mehrwertigen Brückenglieder bedeutet:

-N-H
|
Alkylen($C_1$-$C_4$)-,

-N-CO-Alkylen($C_1$-$C_4$)-, -$CH_2$-,
|
(H, Alkyl $C_1$-$C_4$)

-CONH-Alkylen($C_1$-$C_4$)-, -$SO_2$NH-Alkylen($C_1$-$C_4$)-,

-$CH_2$-NHCO-Alkylen($C_1$-$C_4$)-, oder

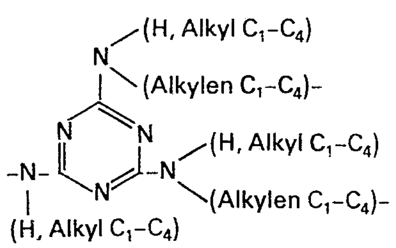

wobei jeder der Alkyl- und Alkylenreste noch substituiert sein kann.

6. Verwendung nach Anspruch 1 von Chinophthalonverbindungen der Formel I, worin Z bedeutet:

-NH-$CH_2$CH(OH)-$CH_2$,

-$CH_2$-NHCO-Alkylen($C_1$-$C_4$)- insbesondere

-$CH_2$-NHCO-$CH_2$- und

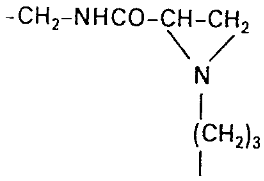

-N-CO-Alkylen($C_1$-$C_4$)-, vor allem -NHCO-$CH_2$-
|
(H, Alkyl $C_1$-$C_4$)

oder

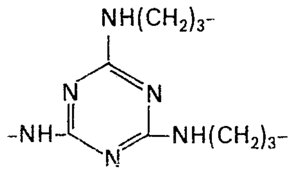

7. Verwendung nach Anspruch 1 von Chinophthalonverbindungen der Formel I, worin Q einen kationischen Rest der Formel

$R_3$
|
$\overset{\oplus}{-N}$-$R_4$
|
$R_5$

bedeutet, worin $R_3$, $R_4$ und $R_5$ unabhängig voneinander einen gegebenenfalls substituierten $C_1$-$C_4$-Alkylrest bedeutet oder $R_3$, $R_4$ und $R_5$ bilden zusammen mit dem N-Atom einen heterocyclischen Ring.

8. Verwendung nach Anspruch 1 von Chinophthalonverbindungen der Formel I, worin Q den Pyridiniumrest der Formel

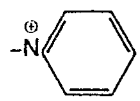

darstellt.

9. Verwendung nach Anspruch 1 von Chinophthalonverbindungen der Formel I, worin m die Zahl 1 bedeutet.

10. Verwendung nach Anspruch 1 von Chinophthalonverbindungen der Formel I, worin bedeuten:
Y einen Substituenten der Formeln

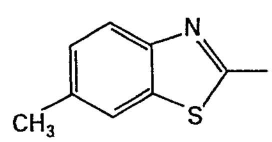 oder 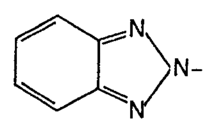

oder einen in 5/6- oder 7/8-Stellung anellierten Benzolring,
der Kern B nicht substituiert ist,
der Kern A nicht substituiert ist oder durch Halogen oder gegebenenfalls durch den Rest $(Z)_m(Q)^{\oplus}{}_n An^{\ominus}{}_n$ substituiert ist,
Z ein mehrwertiges Brückenglied der Formel

$-CH_2NHCOCH_2-$, $-NHCOCH_2-$ oder

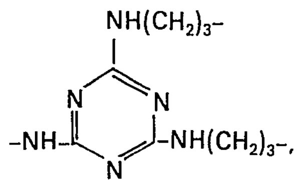

Q einen kationischen Rest der Formel

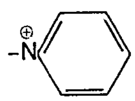 oder $-\overset{\oplus}{N}(CH_3)_3$,

und m die Zahl 1.

11. Verwendung nach einem der Ansprüche 1–10 zum Färben und Bedrucken von Papier aller Arten.

12. Verwendung nach Anspruch 11 zum Färben und Bedrucken von gebleichtem, ungeleimtem ligninfreiem Papier (Tissue).

13. Verwendung nach einem der Ansprüche 1–10 zum Färben und Bedrucken von Polyacrylnitril- oder Cellulosematerialien.

14. Die nach einem der Ansprüche 1–13 gefärbten oder bedruckten Materialien.

**Claims for the Contracting States: BE, DE, FR, GB, IT, SE, CH + LI**

1. A quinophthalone compound of formula I

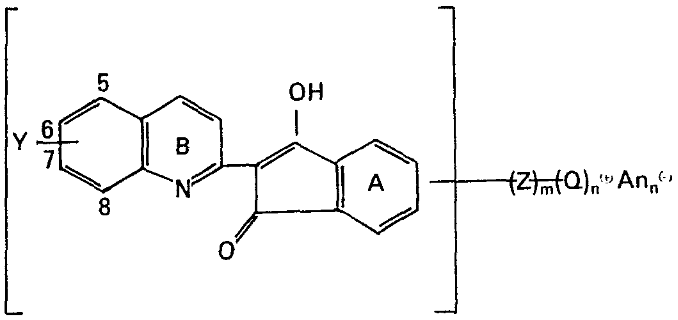 (I),

wherein
Y is either a substituent of the formula

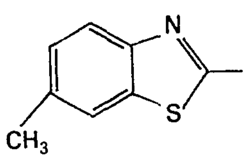 , 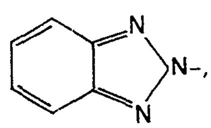

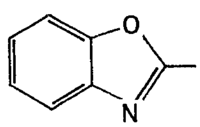 or 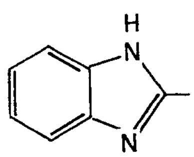

or a benzene ring which is annularly linked in the 5/6- or 7/8-position, which substituents and benzene rings may be substituted;
Z is a polyvalent bridge member;
Q is a cationic radical of the formula

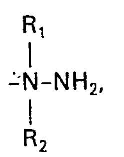 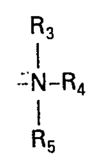 or 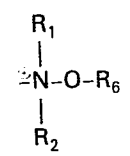

in which each of $R_1$ to $R_6$ independently of one another is an unsubstituted or substituted $C_1$–$C_4$alkyl group, or $R_1$ and $R_2$ or $R_3$ and $R_4$ or $R_3$ and $R_4$ and $R_5$ together with the N atom form a heterocyclic ring;
m is 1 or 2,
n is 1 or 2, and
An is an anion;
and wherein the nuclei A and/or B may be substituted.

2. A quinophththalone compound of formula I according to claim 1, wherein Y is the substituent of the formula

3. A quinophthalone compound of formula I according to claim 1, wherein Y is a benzene ring which is annularly linked in the 5/6- or 7/8-position.

4. A quinophthalone compound of formula I according to claim 1, wherein the nuclei A and B are not further substituted, except optionally by the grouping $(Z)_m(Q)_n{}^{\oplus}An^{\ominus}{}_n$, or wherein the nucleus A is substituted by halogen.

5. A quinophthalone compound of formula I according to claim 1, wherein Z is any one of the following polyvalent bridge members:

-N-H
|
alkylene($C_1$–$C_4$)-,

-N-CO-alkylene($C_1$–$C_4$)-, $-CH_2-$,
|
(H, alkyl $C_1$–$C_4$)

-CONH-alkylene($C_1$–$C_4$)-,

$-SO_2NH-$alkylene($C_1$–$C_4$)-,

$-CH_2-NHCO-$alkylene($C_1$–$C_4$)- or

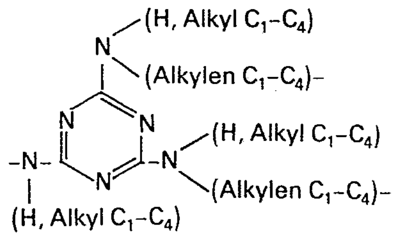

the alkyl and alkylene groups of which may be further substituted.

6. A quinophthalone compound according to claim 5, wherein Z is

$-NH-CH_2CH(OH)-CH_2-$,

$-CH_2-NHCO-alkylene(C_1-C_4)-$,

especially $-CH_2-NHCO-CH_2-$,

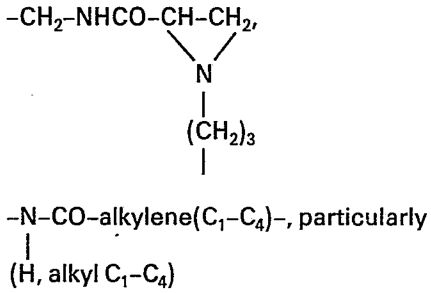

particularly

$-NHCO-CH_2-$, or

7. A quinophthalone compound of formula I according to claim 1, wherein Q is a cationic radical of the formula

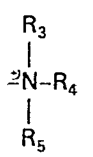

wherein each of $R_3$, $R_4$ and $R_5$ independently of one another is an unsubstituted or substituted $C_1-C_4$alkyl group, or $R_3$, $R_4$ and $R_5$ together with the N atom form a heterocyclic ring.

8. A quinophthalone compound according to claim 7, wherein Q is the pyridinium ring of the formula

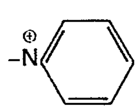

9. A quinophthalone compound of formula I according to claim 1, wherein m is 1.

10. A quinophthalone compound of formula I according to claim 1, wherein:
Y is a substituent of the formula

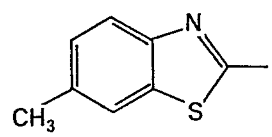

or

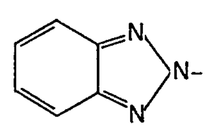

or a benzene ring annularly linked in the 5/6- or 7/8-position,
the nucleus B is unsubstituted,
the nucleus A is unsubstituted, or is substituted by halogen, or optionally by a grouping $-(Z)_m(Q)^{\oplus}_n An^{\ominus}_n$,
Z is a polyvalent bridge member of the formula

$-CH_2NHCOCH_2-$, $-NHCOCH_2-$

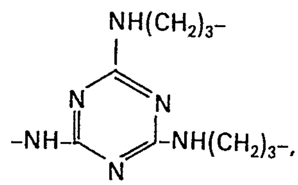

Q is a cationic radical of the formula

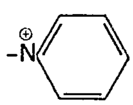

or $-\overset{\oplus}{N}(CH_3)_3$, and

m is 1.

11. Use of a quinophthalone compound of formula I according to claim 1 as a dye for dyeing and printing textile materials, paper and leather, and for the preparation of inks.

12. Use according to claim 11 for dyeing and printing paper of all types.

13. Use according to claim 12 for dyeing and printing bleached, unsized, lignin-free paper (tissues).

14. Use according to claim 11 for dyeing and printing polyacrylonitrile or cellulose materials.

15. The materials dyed or printed with a quinophthalone compound of formula I according to claim 1.

**Claims for the Contracting State: AT**

1. Use of a quinophthalone compound of formula I

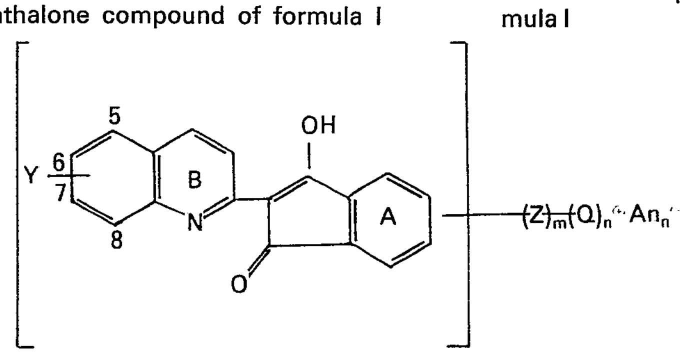

(I),

wherein

Y is either a substituent of the formula

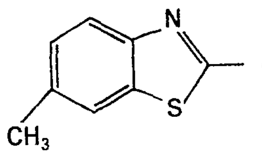

,

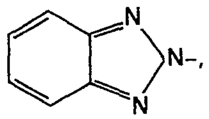

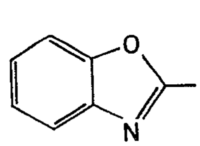

or

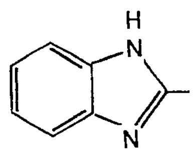

or a benzene ring which is annularly linked in the 5/6- or 7/8-position, which substituents and benzene rings may be substituted;

Z is a polyvalent bridge member;

Q is a cationic radical of the formula

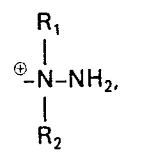

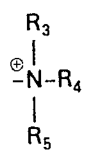

or

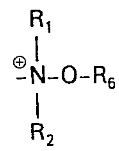

in which each of $R_1$ to $R_6$ independently of one another is an unsubstituted or substituted $C_1$–$C_4$alkyl group, or $R_1$ and $R_2$ or $R_3$ and $R_4$ or $R_3$ and $R_4$ and $R_5$ together with the N atom form a heterocyclic ring;

m is 1 or 2,

n is 1 or 2, and

An is an anion;

and wherein the nuclei A and/or B may be substituted, as a dye for dyeing and printing textile materials, paper and leather, and for the preparation of inks.

2. Use according to claim 1 of a quinophthalone compound of formula I, wherein Y is the substituent of the formula

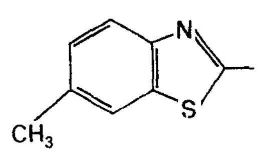

,

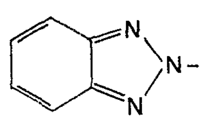

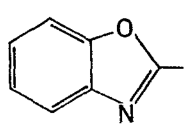

or

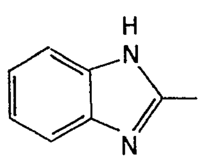

3. Use according to claim 1 of a quinophthalone compound of formula I, wherein Y is a benzene ring which is annularly linked in the 5/6- or 7/8-position.

4. Use according to claim 1 of a quinophthalone compound of formula I, wherein the nuclei A and B are not further substituted, except optionally by the grouping $(Z)_{\overline{m}}(Q)_n^{\oplus}An^{\ominus}_n$, or wherein the nucleus A is substituted by halogen.

5. Use according to claim 1 of a quinophthalone compound of formula I, wherein Z is any one of the following polyvalent bridge members:

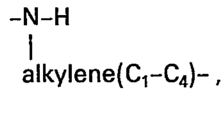

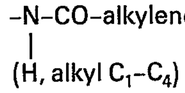

, $-CH_2-$,

$-CONH-alkylene(C_1-C_4)-$,

$-SO_2NH-alkylene(C_1-C_4)-$,

$-CH_2-NHCO-alkylene(C_1-C_4)-$ or

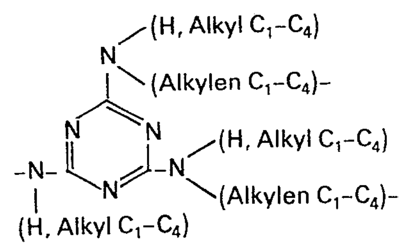

the alkyl and alkylene groups of which may be further substituted.

6. Use according to claim 1 of a quinophthalone compound of formula I, wherein Z is

$-NH-CH_2CH(OH)-CH_2-$,

$-CH_2-NHCO-alkylene(C_1-C_4)-$,

especially $-CH_2-NHCO-CH_2-$,

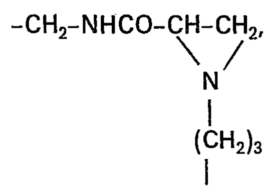

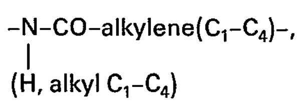

particularly

$-NHCO-CH_2-$, or

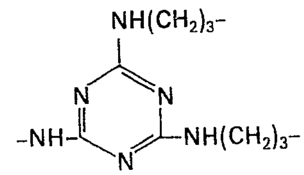

7. Use according to claim 1 of a quinophthalone compound of formula I, wherein Q is a cationic radical of the formula

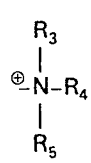

wherein each of $R_3$, $R_4$ and $R_5$ independently of

one another is an unsubstituted or substituted $C_1$–$C_4$alkyl group, or $R_3$, $R_4$ and $R_5$ together with the N atom form a heterocyclic ring.

8. Use according to claim 1 of a quinophthalone compound for formula I, wherein Q is the pyridinium ring of the formula

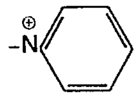

9. Use according to claim 1 of a quinophthalone compound of formula I, wherein m is 1.

10. Use according to claim 1 of a quinophthalone compound of formula I, wherein:
Y is a substituent of the formula

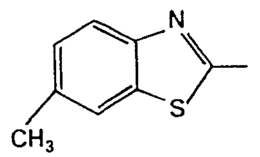 , ou 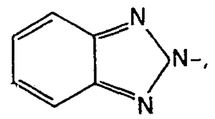

or a benzene ring annularly linked in the 5/6- or 7/8-position,
the nucleus B is unsubstituted,
the nucleus A is unsubstituted, or is substituted by halogen, or optionally by the grouping

$(Z)_m(Q)^{\oplus}{}_nAn^{\ominus}{}_n$,
Z is a polyvalent bridge member of the formula

$-CH_2NHCOCH_2-$, $-NHCOCH_2-$ or

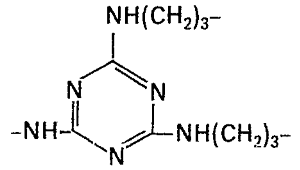

Q is a cationic radical of the formula
m is 1.

11. Use according to any one of claims 1 to 10 for dyeing and printing paper of all types.

12. Use according to claim 11 for dyeing and printing bleached, unsized, lignin-free paper (tissues).

13. Use according to any one of claims 1 to 10 for dyeing and printing polyacrylonitrile or cellulose materials.

14. The materials dyed or printed according to any one of claims 1 to 13.

**Revendications pour les Etats contractants: BE, DE, FR, GB, IT, SE, CH + LI**

1. Composés quinophtalones de formule I

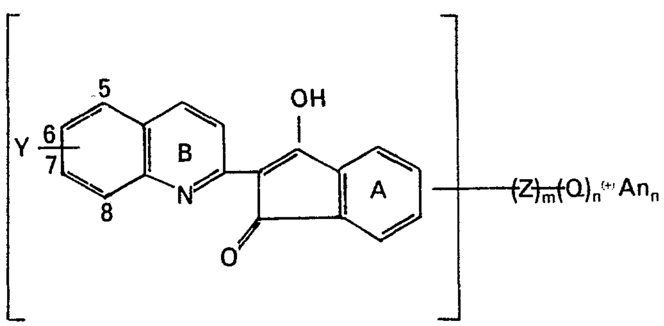

(I),

dans laquelle:
Y représente soit un substituant de formule

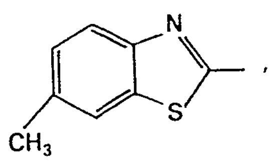 , 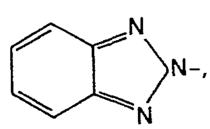

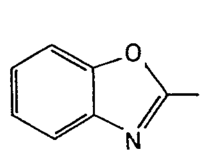 ou 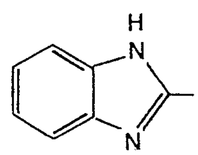

soit un noyau benzénique condensé en position 5/6 ou 7/8, ces substituants et ces noyaux benzéniques pouvant être substitués;
Z représente un élément pontant polyvalent,
Q représente un résidu cationique de formule

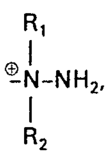 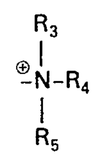 ou 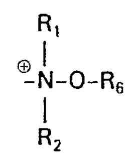

dans lesquelles $R_1$ à $R_6$ représentent, indépendamment l'un de l'autre, un groupe alkyle en $C_{1-4}$ éventuellement substitué, ou bien les groupes $R_1$ et $R_2$, ou $R_3$ et $R_4$, ou $R_3$ et $R_4$ et $R_5$, forment ensemble avec l'atome d'azote un noyau hétérocyclique;
m représente le nombre 1 ou 2, n le nombre 1 ou 2,
An représente un anion,
les noyaux A et/ou B pouvant être substitués.

2. Composés quinophtalones de formule I conformes à la revendication 1, caractérisés en ce que Y représente le substituant de formule

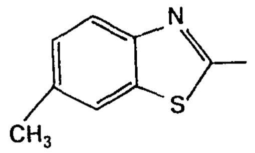,
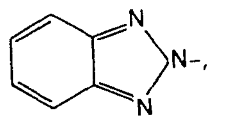

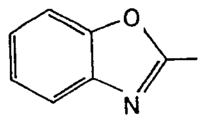 ou
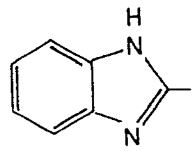

3. Composés quinophtalones de formule I conformes à la revendication 1, caractérisés en ce que Y représente un noyau benzénique condenseé en position 5/6 ou 7/8.

4. Composés quinophtalones de formule I conformes à la revendication 1, caractérisés en ce que les noyaux A et B, éventuellement à l'exception du groupe $(Z)_{\overline{m}}(Q)_n{}^{\oplus}An^{\ominus}{}_n$, ne sont pas autrement substitués, ou que le noyau A est substitué par un atome d'halogène.

5. Composés quinophtalones de formule I conformes à la revendication 1, caractérisés en ce que Z représente l'un des éléments pontants polyvalents suivants:

-N-H
|
Alkylène($C_1$-$C_4$)-,

-N-CO-alkylène($C_1$-$C_4$)-, $-CH_2-$,
|
(H, alkyle $C_1$-$C_4$)

-CONH-alkylène($C_1$-$C_4$)-,

$-SO_2NH$-alkylène($C_1$-$C_4$)-,

$-CH_2$-NHCO-alkylène($C_1$-$C_4$)-, ou

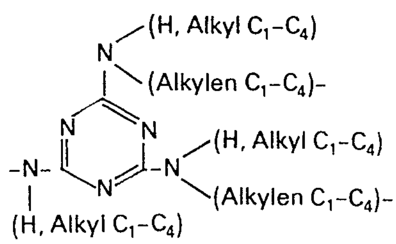

chacun des groupes alkyle et alkylène pouvant encore être substitué.

6. Composés quinophtalones conformes à la revendication 5, caractérisés en ce que Z représente:

$-NH-CH_2CH(OH)-CH_2-$,
$-CH_2NHCO$-alkylène($C_1$-$C_4$)-, en particulier

$-CH_2NHCO-CH_2$ et 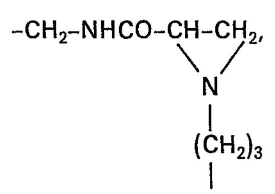

N-CO-alkylène($C_1$-$C_4$)-, surtout $-NHCO-CH_2-$
|
(H, alkyle $C_1$-$C_4$) et

7. Composés quinophtalones de formule I conformes à la revendication 1, caractérisés en ce que Q représente un résidu cationique de formule

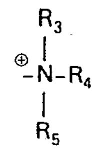

dans laquelle $R_3$, $R_4$ et $R_5$, indépendamment l'un de l'autre, représentent un groupe alkyle en $C_{1-4}$ éventuellement substitué, ou bien $R_3$, $R_4$ et $R_5$ forment ensemble avec l'atome d'azote un noyau hétérocyclique.

8. Composés quinophtalones conformes à la revendication 7, caractérisés en ce que Q représente le groupe pyridinium de formule

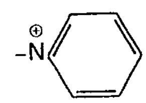

9. Composés quinophtalones de formule I conformes à la revendication 1, caractérisés en ce que m représente le nombre 1.

10. Composés quinophtalones de formule I conformes à la revendication 1, caractérisés en ce que:
Y représente un substituant de formule

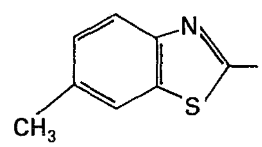, ou 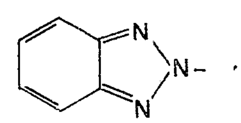,

ou bien un noyau benzénique condensé en position 5/6 ou 7/8,
le noyau B n'est pas substitué,
le noyau A n'est pas substitué, ou bien il est substitué par un atome d'halogène ou éventuellement par le groupe $(Z)_{\overline{m}}(Q)^{\oplus}{}_nAn^{\ominus}{}_n$,
Z est un élément pontant polyvalent de formule

$-CH_2NHCOCH_2-$, $-NHCOCH_2-$ ou

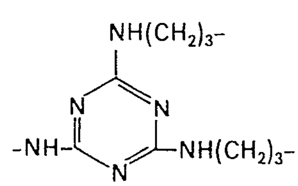

Q est un groupe cationique de formule

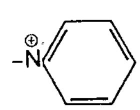 ou $-\overset{\oplus}{N}(CH_3)_3$,

et m représente le nombre 1.

11. Utilisation des composés quinophtalones de formule I conformes à la revendication 1, comme colorants pour la teinture et l'impression de matériaux textiles, de papier, de cuir, et pour la préparation d'encres.

12. Utilisation conforme à la revendication 11, pour la teinture et l'impression de papiers de toutes sortes.

13. Utilisation conforme à la revendication 12, pour la teinture et l'impression de papiers blanchis, non collés, exempts de lignine (papier tissu).

14. Utilisation conforme à la revendication 11, pour la teinture et l'impression de matériaux en polyacrylonitrile ou en cellulose.

15. Matériaux teints et imprimés avec les composés quinophtalones de formule I conformes à la revendication 1.

**Revendications (pour l'Etat contractant AT)**

1. Utilisation de composés quinophtalones de formule I

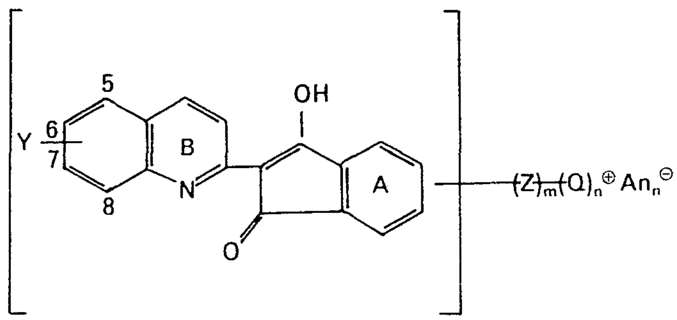

(I).

dans laquelle:
Y représente soit un substituant de formule

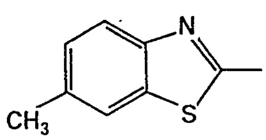

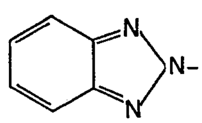

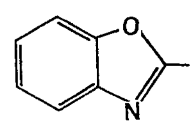

ou

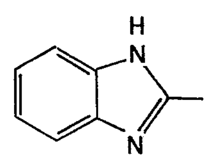

soit un noyau benzénique condensé en position 5/6 ou 7/8, ces substituants et ces noyaux benzéniques pouvant être substitués;
Z représente un élément pontant polyvalent,
Q représente un résidu cationique de formule

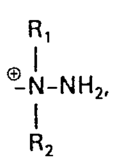

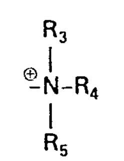

ou

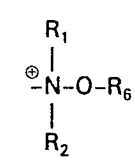

dans lesquelles $R_1$ à $R_6$ représentent, indépendamment l'un de l'autre, un groupe alkyle en $C_{1-4}$ éventuellement substitué, ou bien les groupes $R_1$ et $R_2$, ou $R_3$ et $R_4$, ou $R_3$ et $R_4$ et $R_5$, forment ensemble avec l'atome d'azote un noyau hétérocyclique;
m représente le nombre 1 ou 2, n le nombre 1 ou 2,
An représente un anion,
les noyaux A et/ou B pouvant être substitués, en tant que colorants pour la teinture et l'impression de matériaux textiles, de papier, de cuir, et pour la préparation d'encres.

2. Utilisation selon la revendication 1 de composés quinophtalones de formule I, dans laquelle Y représente le substituant de formule

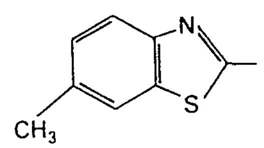

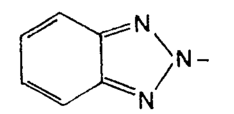

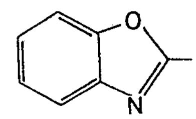

ou

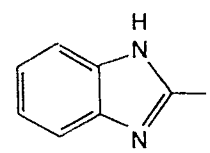

3. Utilisation selon la revendication 1 de composés quinophtalones de formule I, dans laquelle Y représente un noyau benzénique condensé en position 5/6 ou 7/8.

4. Utilisation selon la revendication 1 de composés quinophtalones de formule I, dans laquelle les noyaux A et B, éventuellement à l'exception du groupe $-(Z)_m-(Q)_n{}^{\oplus}An^{\ominus}{}_n$, ne sont pas autrement substitués, ou dans laquelle le noyau A est substitué par un atome d'halogène.

5. Utilisation selon la revendication 1 de composés quinophtalones de formule I, dans laquelle Z représente l'un des éléments pontants polyvalents suivants:

-N-H
|
Alkylène($C_1$-$C_4$)-,

-N-CO-alkylène($C_1$-$C_4$)-, $-CH_2-$,
|
(H, alkyle $C_1$-$C_4$)

-CONH-alkylène($C_1$-$C_4$)-,

$-SO_2NH$-alkylène$(C_1-C_4)$-,

$-CH_2-NHCO$-alkylène$(C_1-C_4)$-, ou

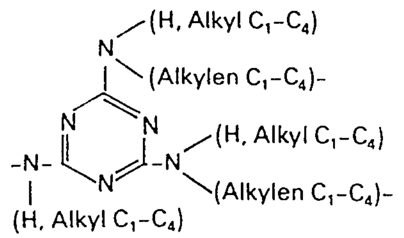

chacun des groupes alkyle et alkylène pouvant être encore substitué.

6. Utilisation selon la revendication 1 de composés quinophtalones de formule I, dans laquelle Z représente:

$-NH-CH_2CH(OH)-CH_2-$,

$-CH_2NHCO$-alkylène$(C_1-C_4)$-, en particulier

$-CH_2NHCO-CH_2$ et 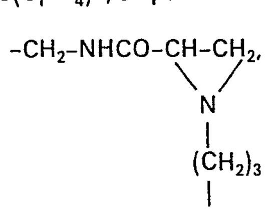

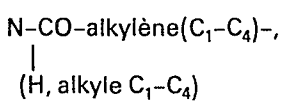 surtout $-NHCO-CH_2-$

7. Utilisation selon la revendication 1 de composés quionophtalones de formule I, dans laquelle Q représente un groupe cationique de formule

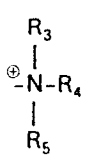

dans laquelle $R_3$, $R_4$ et $R_5$, indépendamment l'un de l'autre, représentent un groupe alkyle en $C_{1-4}$ éventuellement substitué, ou bien $R_3$, $R_4$ et $R_5$ forment ensemble avec l'atome d'azote un noyau hétérocyclique.

8. Utilisation selon la revendication 1 de composés quinophtalones de formule I, dans laquelle Q représente le groupe pyridinium de formule

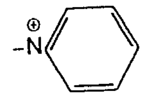

9. Utilisation selon la revendication 1 de composés quinophtalones de formule I, dans laquelle m représente le nombre 1.

10. Utilisation selon la revendication 1 de composés quinophtalones de formule I, dans laquelle:
Y représente un substituant de formule

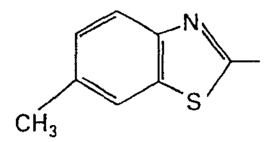 , ou 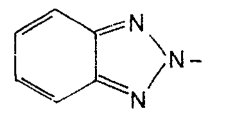 ,

ou bien un noyau benzénique condensé en position 5/6 ou 7/8,
le noyau B n'est pas substitué,
le noyau A n'est pas substitué, ou bien il est substitué par un atome d'halogène, ou bien éventuellement par le groupe $(Z)_{\overline{m}}(Q)^{\oplus}{}_n An^{\ominus}{}_n$,
Z est un élément pontant polyvalent de formule

$-CH_2NHCOCH_2-$, $-NHCOCH_2-$

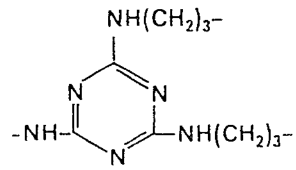

Q est un groupe cationique de formule

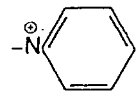 ou $-\overset{\oplus}{N}(CH_3)_3$,

et m représente le nombre 1.

11. Utilisation selon l'une des revendications 1-10, pour la teinture et l'impression de papiers de toutes sortes.

12. Utilisation selon la revendication 11, pour la teinture et l'impression de papiers blanchis, non collés, exempts de lignine (papier tissu).

13. Utilisation selon l'une des revendications 1-10, pour la teinture et l'impression de matériaux en polyacrylonitrile ou en cellulose.

14. Matériaux teints ou imprimés selon l'une des revendications 1-13.